# FASCICULE DE BREVET EUROPEEN

(11) **EP 3 119 633 B1**
(45) Date de publication et mention de la délivrance du brevet: **03.04.2019**
(21) Numéro de dépôt: 15706902.2
(22) Date de dépôt: 10.02.2015
(51) Int. Cl.: B60K 11/06, B60K 11/04

(54) **GRILLE DE REFROIDISSEUR D'AIR DE SURALIMENTATION DE VEHICULE AUTOMOBILE**
GITTER FÜR EINEN LADELUFTKÜHLER EINES KRAFTFAHRZEUGS
GRILLE FOR A CHARGE AIR COOLER OF A MOTOR VEHICLE

(30) Priorité: 18.03.2014 FR 1452210
(43) Date de publication de la demande: 25.01.2017
(73) Titulaire: PSA Automobiles SA, 78300 Poissy (FR)
(72) Inventeur: BESSAULT, Jean Christophe, F-25310 Herimoncourt (FR)
(74) Mandataire: Bourguignon, Eric Pascal Jean
(86) Numéro de dépôt international: PCT/FR2015/050310
(87) Numéro de publication internationale: WO 2015/140428

(56) Documents cités:
- EP-A1- 2 489 537
- DE-A1- 10 159 783
- DE-A1-102006 014 443
- US-A1- 2010 071 977
- US-A1- 2012 068 498

## Description

L'invention concerne les moteurs à combustion de véhicule automobile et plus précisément les moteurs à combustion munis d'un compresseur de suralimentation et d'un refroidisseur d'air de suralimentation ou RAS.

On connait le principe consistant à positionner un échangeur thermique en façade d'un véhicule automobile de manière à ce que ce dernier soit brassé par un flux d'air le plus vigoureux possible. On connait en outre, par exemple du document DE102006014443A1, le fait d'évacuer un tel flux d'air, après refroidissement de l'échangeur, à l'intérieur d'un passage de roue du véhicule de manière à rendre une grille d'évacuation de l'air la plus discrète possible. De tels montages ont été proposés dans les documents FR-2964935 et DE-10159783 pour le refroidissement du bloc moteur, c'est-à-dire pour le refroidissement du liquide de refroidissement circulant dans le bloc moteur.

Néanmoins il reste plusieurs difficultés pour le refroidissement de l'air de suralimentation. D'une part l'échangeur, également appelé radiateur, reste volumineux et il doit pourtant être logé dans un volume disponible qui est de plus en plus restreint. D'autre part il faut organiser l'évacuation de l'air après refroidissement de manière discrète tout en restant robuste aux agressions extérieures telles que l'eau, la boue, ou encore la poussière. Le but de l'invention est de pallier à ces difficultés.

Ce but est atteint selon l'invention grâce à un véhicule automobile comprenant un échangeur thermique de refroidisseur d'air de suralimentation et une grille d'évacuation d'air de refroidissement de l'échangeur thermique de refroidisseur d'air de suralimentation disposée dans un passage de roue du véhicule, la grille comportant une partie haute et une partie basse, la partie haute et la partie basse présentant chacune une pluralité d'ailettes respective, caractérisé en ce que les ailettes de la partie basse sont orientées de manière à défléchir un flux d'air de manière plus forte que les ailettes de la partie haute, et la partie basse comporte des ailettes orientées de manière à défléchir un flux d'air en direction d'une zone extérieure latérale au véhicule.

On comprend dans l'ensemble du texte par « haut », « bas » et autres indications spatiales comme des références à l'orientation du dispositif/du composant dans sa configuration de montage dans un véhicule de type véhicule automobile, à l'arrêt et posé sur un plan horizontal.

Avantageusement, la partie basse comporte deux zones dont l'une est plus proche d'un compartiment moteur du véhicule que l'autre, et les ailettes orientées de manière à défléchir un flux d'air en direction d'une zone extérieure latérale au véhicule sont disposées dans la zone la plus proche du compartiment moteur.

Avantageusement, la partie basse comporte des ailettes orientées de manière à défléchir un flux d'air vers le bas.

Avantageusement, la partie basse comporte deux zones dont l'une est plus éloignée d'un compartiment moteur du véhicule que l'autre, et les ailettes orientées de manière à défléchir un flux d'air vers le bas sont disposées dans la zone la plus éloignée du compartiment moteur.

Avantageusement, l'échangeur thermique de refroidisseur d'air de suralimentation est disposé en recouvrement au moins partiel de la grille d'évacuation d'air.

Avantageusement, le véhicule comporte un pare-boue et la grille est placée dans un orifice du pare-boue.

Avantageusement, le véhicule est un véhicule à arrêt et redémarrage automatique de moteur lors d'une immobilisation du véhicule.

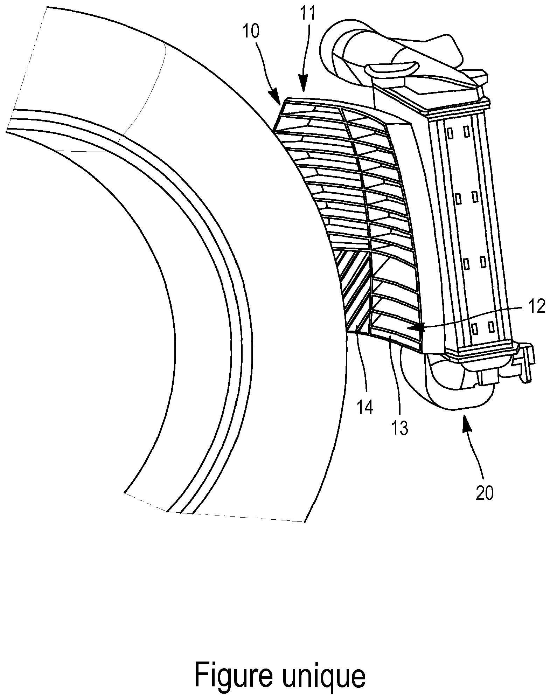

D'autres caractéristiques, buts et avantages de l'invention apparaitront à la lecture de la description détaillée qui va suivre, faite en référence à la figure unique annexée, qui représente une grille d'évacuation d'air de refroidissement d'un refroidisseur d'air de suralimentation selon l'invention.

La grille d'évacuation d'air représentée sur la figure annexée sous la référence 10 est une grille d'évacuation d'air d'un refroidisseur d'air de turbocompresseur dont l'échangeur thermique est représenté sous la référence 20.

La grille 10 permet à l'air de s'évacuer à l'extérieur du véhicule et plus précisément ici dans un passage de roue du véhicule. Cette grille 10 protège l'échangeur 20 de la boue, de la neige, des gravillons et protège en outre les courroies des différents accessoires du moteur de l'aspersion éventuelles, notamment lors de passages de gué. Une telle grille évite ainsi les non-redémarrages de type accidentels, notamment lorsque le véhicule est un véhicule à arrêt et redémarrage automatiques du moteur lors d'une immobilisation momentanée du véhicule, véhicules également appelés STT pour Stop and Start selon la terminologie anglo-saxonne.

La grille 10 présente ici deux parties, respectivement une partie haute 11 et une partie basse 12. La grille 10 est ici prévue pour être disposée dans un passage de roue, et plus précisément dans un orifice du pare-boue.

La partie haute 11, moins exposée aux projections d'eau, de boue et de gravillons, est ici tapissée d'ailettes horizontales quand on les considère dans le plan de la grille. Les ailettes de la partie haute 11 présentent une orientation à faible déflection, les ailettes étant sensiblement alignées avec le flux d'air sortant de l'échangeur 20. De par cette faible déflection, le flux d'air se trouve peu freiné au bénéfice d'un meilleur refroidissement de l'échangeur.

Avantageusement, la partie basse 12 est quant à elle divisée en deux zones. Une zone extérieure 13 est disposée de manière adjacente au côté latéral extérieur du véhicule et une zone intérieure 14 est disposée de manière adjacente au compartiment moteur. La zone extérieure 13 est tapissée d'ailettes de direction principale horizontale dans le plan de la grille, et orientées de manière à défléchir le flux d'air vers le bas. Cette orientation vers le bas a pour effet de briser une projection d'air montante dans le passage de roue laquelle est susceptible de faire remonter de l'eau, de la boue et des gravillons vers le pare-boue. Grâce à une telle orientation vers le bas, de telles remontées sont atténuées, la zone 13 contribuant à réduire les agressions extérieures sur la grille mais aussi sur l'environnement de la grille. Ainsi notamment l'échangeur 20 se trouve protégé de l'eau et des boues, et plus globalement la grille ne constitue pas une zone de pénétration d'eau et de boue dans le compartiment moteur. Les courroies et autres éléments sensibles s'en trouvent protégés, ce qui est appréciable notamment dans le cas d'un véhicule STT où la courroie d'alterno-démarreur est particulièrement sollicitée.

Avantageusement, la zone intérieure 14 est composée d'une série d'ailettes lesquelles sont disposées à l'oblique dans le plan de la grille, c'est-à-dire selon une direction dans le plan de la grille qui est ici sensiblement à 45 degrés et descendante lorsqu'elle est parcourue depuis l'extérieur vers l'intérieur du passage de roue. Les ailettes sont en outre inclinées par rapport au flux d'air de telle sorte qu'elles défléchissent l'air vers le bas et l'extérieur du véhicule. Du fait qu'il est dirigé vers l'extérieur, le flux d'air se trouve dirigé en éloignement de l'emplacement des freins et on s'assure ainsi que le flux d'air ne vient pas réchauffer ceux-ci, déjà sujets à échauffement par frottement. Du fait qu'il est dirigé vers le bas, le flux d'air passant à travers la zone 14 vient en outre briser les projections montantes d'eau, de boue et de gravillons, renforçant ainsi l'effet de protection produit par la zone extérieure 13 contre les intrusions d'eau et de boues.

Du fait de la faible déflection de la partie haute 11 et de la déflection descendante de la partie basse 12, la présente grille produit à la fois une grande efficacité en refroidissement de l'échangeur 20 et un effet de protection vis-à-vis des projections d'eau, de boue et de gravillons, la combinaison d'une telle partie haute et d'une telle partie basse produisant un effet supérieur à l'effet d'une grille où l'ensemble des ailettes auraient une même orientation. De plus, une telle grille présente un encombrement particulièrement réduit.

La présente grille est avantageusement réalisée en une matière plastique distincte de celle constituant le pare-boue et choisie pour être résistante à la chaleur dégagée par l'échangeur 20, telle qu'un polyamide. Dans ce cas, le pare-boue, du fait qu'il ne recouvre pas l'échangeur, peut être réalisé en matière plastique courante telle que du polypropylène. Dans un autre mode de réalisation, la grille est réalisée d'un seul tenant avec le pare-boue par exemple par moulage dans un même moule, cette alternative permettant alors d'économiser la réalisation d'une ou deux pièces.

## Revendications

1. Véhicule automobile comprenant un échangeur thermique de refroidisseur d'air de suralimentation et une grille (10) d'évacuation d'air de refroidissement de l'échangeur thermique de refroidisseur d'air de suralimentation disposée dans un passage de roue du véhicule, la grille comportant une partie haute (11) et une partie basse (12), la partie haute (11) et la partie basse (12) présentant chacune une pluralité d'ailettes respective, **caractérisé en ce que** les ailettes de la partie basse (12) sont orientées de manière à défléchir un flux d'air de manière plus forte que les ailettes de la partie haute (11), et la partie basse (12) comporte des ailettes orientées de manière à défléchir un flux d'air en direction d'une zone extérieure latérale au véhicule..

2. Véhicule selon la revendication 1, **caractérisé en ce que** la partie basse (12) comporte deux zones (13,14) dont l'une (14) est plus proche d'un compartiment moteur du véhicule que l'autre (13), et la zone (14) la plus proche du compartiment moteur comporte des ailettes orientées de manière à défléchir un flux d'air en direction d'une zone extérieure latérale au véhicule.

3. Véhicule selon la revendication 1 ou la revendication 2, **caractérisé en ce que** la partie basse (12) comporte des ailettes orientées de manière à défléchir un flux d'air vers le bas.

4. Véhicule selon la revendication précédente, **caractérisé en ce que** la partie basse (12) comporte deux zones (13,14) dont l'une (13) est plus éloignée d'un compartiment moteur du véhicule que l'autre (14), et les ailettes orientées de manière à défléchir un flux d'air vers le bas sont disposées dans la zone (13) la plus éloignée du compartiment moteur.

5. Véhicule automobile selon l'une quelconque des revendications précédentes, **caractérisé en ce que** l'échangeur thermique de refroidisseur d'air de suralimentation est disposé en recouvrement au moins partiel de la grille (10) d'évacuation d'air.

6. Véhicule automobile selon la revendication précédente, **caractérisé en ce qu'**il comporte un pare-boue et la grille (10) est placée dans un orifice du pare-boue.

7. Véhicule automobile selon l'une quelconque des revendications précédentes, **caractérisé en ce qu'**il est un véhicule à arrêt et redémarrage automatique de moteur lors d'une immobilisation du véhicule.

## Patentansprüche

1. Kraftfahrzeug, das einen Wärmeaustauscher eines Ladeluftkühlers und ein Gitter (10) zur Ableitung von Kühlluft des Wärmeaustauschers des Ladeluftkühlers umfasst, das in einem Radlauf des Fahrzeugs angeordnet ist, wobei das Gitter einen oberen Teil (11) und einen unteren Teil (12) umfasst, wobei der obere Teil (11) und der untere Teil (12) jeweils eine jeweilige Mehrzahl von Rippen aufweisen, **dadurch gekennzeichnet, dass** die Rippen des unteren Teils (12) derart ausgerichtet sind, dass sie einen Luftstrom stärker ablenken als die Rippen des oberen Teils (11), und der untere Teil (12) Rippen umfasst, die derart ausgerichtet sind, dass sie einen Luftstrom in Richtung einer seitlichen Außenzone des Fahrzeugs ablenken.

2. Fahrzeug nach Anspruch 1, **dadurch gekennzeichnet, dass** der untere Teil (12) zwei Zonen (13, 14) umfasst, von welchen eine (14) einem Motorraum des Fahrzeugs näher ist als die andere (13), und die Zone (14), die dem Motorraum näher ist, Rippen umfasst, die derart ausgerichtet sind, dass sie einen Luftstrom in Richtung einer seitlichen Außenzone des Fahrzeugs ablenken.

3. Fahrzeug nach Anspruch 1 oder 2, **dadurch gekennzeichnet, dass** der untere Teil (12) Rippen umfasst, die derart ausgerichtet sind, dass sie einen Luftstrom nach unten ablenken.

4. Fahrzeug nach dem vorstehenden Anspruch, **dadurch gekennzeichnet, dass** der untere Teil (12) zwei Zonen (13, 14) umfasst, von welchen die eine (13) von einem Motorraum des Fahrzeugs weiter entfernt ist als die andere (14), und die Rippen, die derart ausgerichtet sind, dass sie einen Luftstrom nach unten ablenken, in der Zone (13), die von dem Motorraum am weitesten entfernt ist, angeordnet sind.

5. Kraftfahrzeug nach einem der vorstehenden Ansprüche, **dadurch gekennzeichnet, dass** der Wärmeaustauscher des Ladeluftkühlers in mindestens teilweiser Überdeckung des Luftableitungsgitters (10) angeordnet ist.

6. Kraftfahrzeug nach dem vorstehenden Anspruch, **dadurch gekennzeichnet, dass** es einen Schmutzfänger umfasst, und dass das Gitter (10) in einer Öffnung des Schmutzfingers platziert ist.

7. Kraftfahrzeug nach einem der vorstehenden Ansprüche, **dadurch gekennzeichnet, dass** es ein Fahrzeug mit automatischem Stoppen und Neu starten eines Motors bei einem Stillstand des Fahrzeugs ist.

## Claims

1. A motor vehicle including a heat exchanger of a charge air cooler and a grille (10) for evacuating cooling air of the heat exchanger of the charge air cooler, disposed in a wheel arch of the vehicle, the grille comprising an upper part (11) and a lower part (12), the upper part (11) and the lower part (12) each having a respective plurality of fins, **characterized in that** the fins of the lower part (12) are oriented so as to deflect a flow of air stronger than the fins of the upper part (11), and the lower part (12) comprises fins oriented so as to be deflect a flow of air in the direction of an exterior zone lateral to the vehicle.

2. The vehicle according to Claim 1, **characterized in that** the lower part (12) comprises two zones (13, 14), one (14) of which is closer to an engine compartment of the vehicle than the other (13), and the zone (14) closest to the engine compartment comprises fins oriented so as to deflect a flow of air in the direction of an exterior zone lateral to the vehicle.

3. The vehicle according to Claim 1 or Claim 2, **characterized in that** the lower part (12) comprises fins oriented so as to deflect a flow of air downwards.

4. The vehicle according to the preceding claim, **characterized in that** the lower part (12) comprises two zones (13, 14), one (13) of which is further away from an engine compartment of the vehicle than the other (14), and the fins oriented so as to deflect a flow of air downwards are disposed in the zone (13) furthest away from the engine compartment.

5. The motor vehicle according to any one of the preceding claims, **characterized in that** the heat exchanger of the charge air cooler is disposed at least partially covering the air evacuation grille (10) .

6. The motor vehicle according to the preceding claim, **characterized in that** it comprises a mud flap, and the grille (10) is placed in an orifice of the mud flap.

7. The motor vehicle according to any one of the preceding claims, **characterized in that** it is a vehicle with automatic stop and re-start of the engine in the event of immobilization of the vehicle.
